# EUROPEAN PATENT APPLICATION

(11) **EP 0 759 605 A1**
(43) Date of publication of application: **26.02.1997**
(21) Application number: 96306143.7
(22) Date of filing: 22.08.1996
(51) Int. Cl.: G09G 3/36

(54) **Improvements in the connections of data drivers in an active matrix liquid crystal display device**

(30) Priority: 23.08.1995 KR 9526166
(71) Applicant: SAMSUNG ELECTRONICS CO., LTD., Suwon-city, Kyungki-do 441-373 (KR)
(72) Inventor: Kim, Dong-Gyu, Kwonseon-ku, Sowon-si, Kyungki-do (KR); Kim, Sang-Soo, Kangdong-ku, Seoul (KR)
(74) Representative: Kensett, John Hinton

(57) **Abstract**

A liquid crystal display device includes a plurality of pixels (6) arrayed in a matrix, and a plurality of data drivers (8,12) for transmitting a video signal to the pixels. Pixels in the same row receive the video signal from one of the data drivers, while pixels in the adjacent row receive the signal having an opposite data polarity with respect to the same gray level from a different data driver.

## Description

The present invention relates to a liquid crystal display (LCD) device, and more particularly, to a liquid crystal display using a gate line inversion driving technique which reduces horizontal crosstalk and power consumption.

Many devices use liquid crystal displays, such as portable personal computers. These devices optimally include components which consume as little power as possible, so that they can be used as long as possible per battery charge.

Conventional liquid crystal displays commonly require high voltage drive ICs, which in turn require high power consumption. This inhibits their use in such devices as portable computers, because of their drawback in causing a short duration of usage per battery charge. Therefore, it is desirable to use low voltage ICs in the range of 5 V or less in liquid crystal displays. These components also enjoy other advantages such as easier fabrication and lower price as compared to high voltage drive ICs.

A conventional liquid crystal display, in general, includes: a thin-film transistor (TFT) board, wherein a plurality of pixel units, each including a thin-film transistor, a pixel electrode, and storage capacitors, are arrayed in matrix form, and wherein gate lines and data lines are respectively provided along each row and column of pixels; a color filter plate formed by a color filter and a common electrode; and liquid crystal material which is infused into the space between the thin-film transistor board and the color filter plate.

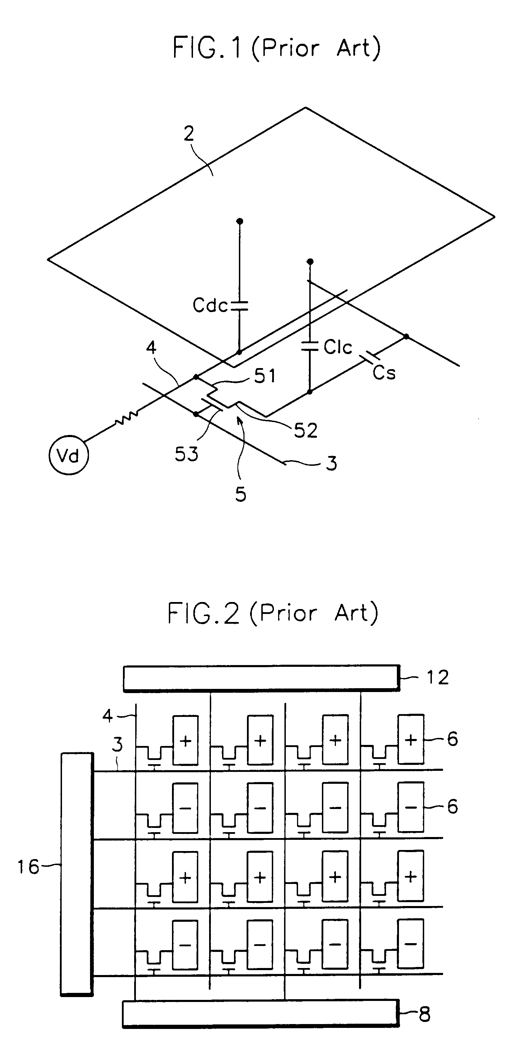

FIG. 1 illustrates an equivalent circuit diagram of one pixel according to a conventional liquid crystal display. As shown, a liquid crystal capacitor (C_{1c}) is formed by a common electrode 2 of a color filter plate, a pixel electrode of a thin-film transistor 5, and the liquid crystal material (not shown) infused into the space therebetween.

The liquid crystal capacitor (C_{1c}) is connected between a drain electrode 52 of thin-film transistor 5 and the common electrode 2. Source electrode 51 of thin-film transistor 5 is connected with data line 4 and gate electrode 53 is connected with gate line 3.

One end of a storage capacitor (Cₛ) is connected to a drain electrode 52 of the thin-film transistor 5. Furthermore, a capacitor (C_{dc}) is formed between the common electrode 2 of the color filter and the data line 4 of the thin-film transistor 5 having liquid crystal as a medium therebetween.

In a conventional LCD as illustrated in FIG. 2, pixels 6 in the same row are commonly connected with a gate driver 16 through gate line 3, while pixels 6 in the same column are commonly connected with data drivers 8 and 12 through data line 4. The two data drivers 8 and 12, however, are oppositely arranged such that the first data driver 8 is connected with the pixels of each jth (j=1,3,5,...) column and the second data driver 12 is connected with the pixels of each (j+1)th column.

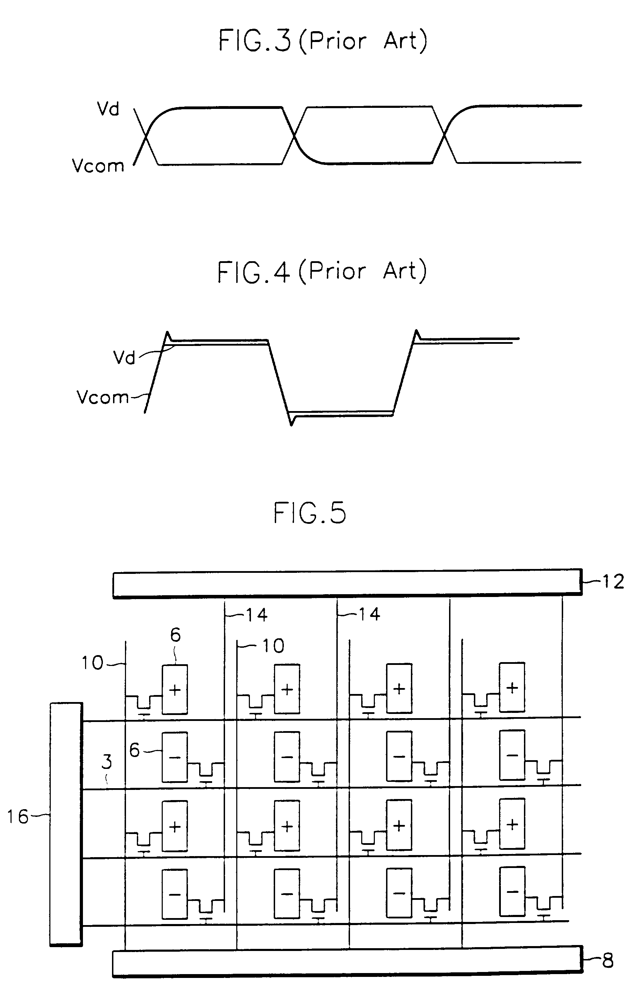

The conventional LCD device described above operates as follows, with reference to FIG. 3 and FIG. 4.

A gate driver 16 transmits gate voltage to each gate line 3 in a consecutive manner such that a data voltage can be selectively applied to each of the pixels 6 in each row one by one in order. Then, the data drivers 8 and 12 transmit the data voltage to the pixels 6 in each row in accordance to the operation of the gate driver 16.

In this conventional drive method, the polarity of the data voltage (Vd) supplied to each adjacent row of pixels 6 should be opposite. That is, the polarity of the data voltages corresponding to black and white data is reversed for each adjacent row of pixels 6. Therefore, as shown in FIG. 3, according to a conventional operation, the common electrode voltage (Vcom) supplied to common electrode has an inverse waveform to that of the data voltage (Vd) representing black data supplied to a column of pixels.

This gate line inversion drive operation is more commonly used than a frame inversion drive operation because it causes less flickering of the display. However, the conventional drive method described above suffers from the following problems.

As illustrated in FIG. 3, the common electrode voltage (Vcom) swings in opposite direction of the data voltage (Vd) when the data voltage (Vd) applied by the data drivers 8 and 12 is black data. However, the common electrode voltage (Vcom) is deflected toward the data voltage (Vd) due to the effects of the data voltage (Vd) and capacitive coupling, thereby generating an RC-type delay in the common electrode voltage (Vcom).

Meanwhile, when the data voltage (Vd) of the data drivers 8 and 12 represents white data, as illustrated in FIG. 4, the common electrode voltage (Vcom) swings correspondingly the data voltage (Vd). In this case, the common electrode voltage (Vcom) is deflected toward the data voltage (Vd) due to the effect of the data voltage (Vd) and the capacitive coupling, thereby generating a resistance delay in the common electrode voltage (Vcom).

Moreover, the relative dielectric constant of the liquid crystal material increases in proportion to the voltage difference between data voltage (Vd) and common electrode voltage (Vcom), thereby resulting in a difference in capacitive coupling between that arising from the transmission of black data and that from white data. This is the major cause of horizontal crosstalk occurring during the inversion drive of the gate lines.

It is, therefore, an object of the present invention to provide a liquid crystal display device that can eliminate horizontal crosstalk in a display using a gate-line inversion drive technique.

It is a further object of the present invention to provide a liquid crystal device which requires a driving voltage lower than 5 V to effect a reduced power consumption.

In order to achieve these and other objects, an embodiment according to the present invention includes a plurality of pixels arrayed in a matrix, and a plurality of data drivers for transmitting a video signal to the pixels, wherein pixels in the same row receive the video signal from one of the data drivers, while pixels in the adjacent row receive the signal from a different data driver.

These and other advantages of the present invention will become better understood by the following detailed description taken in conjunction with the accompanying drawings in which:
FIG. 1 shows an equivalent circuit diagram of one pixel in a conventional liquid crystal display device;
FIG. 2 is a circuit diagram illustrating an array of pixels in a conventional liquid crystal display device;
FIG. 3 illustrates a data voltage waveform representing black data applied in the conventional device illustrated in FIG. 2;
FIG. 4 illustrates a data voltage waveform representing white data applied in the conventional device illustrated in FIG. 2;
FIG. 5 is a circuit diagram illustrating an array of pixels of an embodiment of a liquid crystal display device according to the present invention;
FIG. 6 illustrates a data voltage waveform representing black data applied by the first data driver in the device of FIG. 5;
FIG. 7 illustrates a data voltage waveform representing white data applied by the first data driver in the device of FIG. 5;
FIG. 8 illustrates a data voltage waveform representing black data applied by the second data driver in the device of FIG. 5; and
FIG. 9 illustrates a data voltage waveform representing white data applied by the second data driver in the device of FIG. 5.

With reference to the annexed drawings, a preferred embodiment of the present invention will now be described in detail as follows.

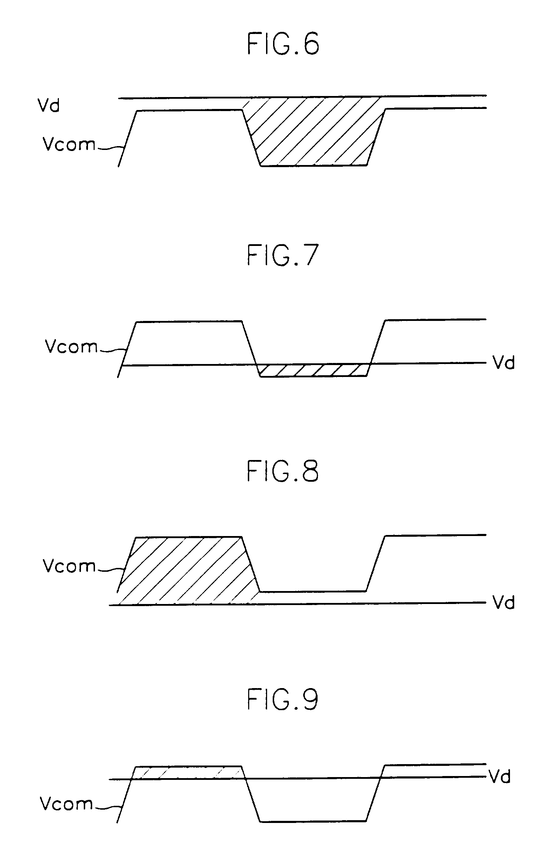

FIG. 5 is a circuit diagram of an embodiment of a liquid crystal display according to the present invention. As shown, the display includes: an array of pixels 6 arranged in a matrix form of rows and columns; a gate line driver connected to gate lines 3, each of which is commonly connected to all pixels in its corresponding row; a first data driver 8 connected with first data lines 10, each of which is commonly connected to the ith (i=1, 3, 5,...) row of pixels in its corresponding column; a second data driver 12 connected with second data lines 14, each of which is commonly connected to the (i+1)th row of pixels in its corresponding column.

To drive the liquid crystal display device as described above, only the polarity of the common electrode voltage applied to each row must be inverted, and not that of the data voltage, as required in the conventional display.

In accordance with a gate drive signal generated by the gate driver 12, a video signal from the corresponding data driver is applied to a relevant pixel. For example, when a video signal is applied from the first data driver 8 through the first data line 10 to a pixel in the first row, the common electrode voltage (Vcom) is in the lowest state, 0 V, and the video signal voltage (Vd) is in the range of 0 - 5 V. Further, when a video signal relevant to a pixel in the second row is transferred from the second data driver 12 to the pixel through the second data line 14, the common electrode voltage (Vcom) is in the highest state, 5 V, and the video signal voltage (Vd) is in the range of 0 - 5 V.

In this manner, each pixel in a row is driven one at a time, while the first data driver and the second data driver generate data signals having opposite polarity from each other with respect to the same gray level.

As illustrated in FIG. 6 and FIG. 7, the gray level voltage corresponding to black and white data, respectively, as applied by the first data driver, is higher than that of the common electrode voltage (Vcom) and its range is between 0 V and 5 V.

As further illustrated in FIG. 8 and FIG. 9, the gray level voltage corresponding to black and white data, respectively, as applied by the second data driver, is lower than that of the common electrode voltage (Vcom) and its range is between 0 V and 5 V.

Accordingly, the data drivers 8 and 12 in the present invention transmit data voltage to the pixels in a stable manner, without requiring inversion as in the conventional display. Therefore, the common voltage (Vcom) can be protected from fluctuating up or down and the occurrence of horizontal crosstalk can be reduced to a minimum, even when using the gate line inversion driving method. Furthermore, the display according to the present invention can employ a low voltage data driver requiring driving voltages less than 5 V, thereby reducing power consumption.

Although the present invention has been herein described with reference to the preferred embodiment thereof, those skilled in the art will readily appreciate that various modifications and substitutions can be made thereto, without departing from the spirit and scope of the invention as set forth in the appended claims.

## Claims

1. A liquid crystal display comprising:
a plurality of pixels arrayed in a matrix of rows and columns; and
first and second data drivers which transmit video signals to said pixels, said first data driver transmitting video signals to all pixels in a first row, and said second data driver transmitting video signals to all pixels in a second row adjacent to said first row.

2. A liquid crystal display according to Claim 1, wherein said video signals activate said pixels in accordance with a gray data level and wherein said first data driver transmits video signals having a polarity opposite that of video signals transmitted by said second data driver with respect to said gray data level.

3. A liquid crystal display according to Claim 1 or Claim 2, further comprising:
a plurality of first data lines which respectively connect said first data driver with each of said pixels in said first row; and
a plurality of second data lines which respectively connect said second data driver with each of said pixels in said second row.

4. A liquid crystal display according to any one of Claims 1 to 3, wherein:
said matrix is comprised of odd rows including said first row and even rows including said second row; and
said first data driver is connected with all pixels in said odd rows and said second data driver is connected with all pixels in said even rows.

5. A liquid crystal display according to Claim 4, further comprising:
a plurality of first data lines connected to said first data driver, each said first data line being commonly connected to pixels which are arrayed in a respective column and in said odd rows of said respective column; and
a plurality of second data lines connected to said second data driver, each said second data line being commonly connected to pixels which are arrayed in a respective column and in said even rows of said respective column.

6. A liquid crystal display according to any preceding claim, further comprising a gate line driver which is coupled to said plurality of pixels, and which is capable of selectively switching on and off each of said pixels in correspondence with said video signals.

7. A liquid crystal display device according to any preceding claim, wherein said first and second data drivers are low voltage data drivers which require driving voltages less than or equal to 5 V.

8. A liquid crystal display comprising:
a plurality of pixels arrayed in a matrix of rows and columns, said rows comprising odd rows and even rows, each of said pixels receiving a gate line signal, a common electrode signal and a video data signal, said pixels being capable of being switched on and off in accordance with said gate line signal, and being capable of being activated in accordance with a gray data level and in correspondence with a voltage difference between said common electrode signal and said video data signal;
a gate driver which transmits said gate line signal;
a plurality of gate lines connected to said gate driver, each said gate line being commonly connected to all pixels in a respective one of said rows;
a first data driver which is capable of transmitting said video data signal;
a plurality of first data lines connected to said first data driver, each said first data line being commonly connected to pixels which are arrayed in a respective column and in said odd rows of said respective column;
a second data driver which is capable of transmitting said video data signal; and
a plurality of second data lines connected to said second data driver, each said second data lines being commonly connected to pixels which are arrayed in a respective column and in said even rows of said respective column.

9. A liquid crystal display according to Claim 8, wherein said gate driver sequentially transmits said gate line signal to one of said gate lines at a time in a predetermined order, a polarity of said common electrode signal being inverted in correspondence with said predetermined order.

10. A liquid crystal display according to Claim 9, wherein said predetermined order is such that said gate driver alternatively transmits said gate line signal to gate lines associated with said odd and even rows, said polarity of said common electrode signal being inverted according to the transmission of said gate line signal to said odd and even rows.

11. A liquid crystal display according to Claim 9, wherein said first data driver transmits said video data signal having an opposite data polarity to that of said video data signal transmitted by said second data driver with respect to said gray data level.

12. A liquid crystal display according to any one of Claims 8 to 11, wherein:
said common electrode signals received by pixels in said odd ones of said rows has a polarity opposite that of said common electrode signal received by pixels in said even ones of said rows; and
said first data driver transmits said video data signal having an opposite data polarity to said video data signal transmitted by said second data driver with respect to said gray data level.

13. A liquid crystal display according to any one of Claims 8 to 12, wherein said gate driver, said first data driver, and said second data driver are low voltage drivers which require driving voltages less than or equal to 5 V.
